(19) Europäisches Patentamt
European Patent Office
Office européen des brevets

(11) EP 3 565 653 B1

(12) **EUROPEAN PATENT SPECIFICATION**

(45) Date of publication and mention of the grant of the patent:
**28.10.2020 Bulletin 2020/44**

(21) Application number: **18701799.1**

(22) Date of filing: **04.01.2018**

(51) Int Cl.:
***B01D 39/16*** *(2006.01)*

(86) International application number:
**PCT/IB2018/050065**

(87) International publication number:
**WO 2018/127831 (12.07.2018 Gazette 2018/28)**

(54) **ELECTRET WEBS WITH CHARGE-ENHANCING ADDITIVES**

ELEKTRETBAHNEN MIT LADUNGSVERSTÄRKENDEN ADDITIVEN

BANDES D'ÉLECTRET À ADDITIFS D'ACCROISSEMENT DE CHARGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.01.2017 US 201762442522 P**

(43) Date of publication of application:
**13.11.2019 Bulletin 2019/46**

(73) Proprietor: **3M Innovative Properties Company**
**St. Paul, MN 55133-3427 (US)**

(72) Inventors:
- **SCHULTZ, Nathan E.**
  **Saint Paul, Minnesota 55133-3427 (US)**
- **LI, Fuming B.**
  **Saint Paul, Minnesota 55133-3427 (US)**
- **VOLP, Kelly A.**
  **Saint Paul, Minnesota 55133-3427 (US)**
- **SEBASTIAN, John M.**
  **Saint Paul, Minnesota 55133-3427 (US)**

(74) Representative: **Mathys & Squire**
**Mathys & Squire Europe LLP**
**Theatinerstraße 7**
**80333 München (DE)**

(56) References cited:
**WO-A1-2007/144283** **WO-A2-2014/172308**
**US-B2- 7 765 698**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 565 653 B1

## Description

### Field of the Disclosure

This disclosure relates to electret webs, including non-woven fibrous webs such as non-woven thermoplastic microfiber webs, containing charge-enhancing additives and uses thereof.

### Background

An electret is a dielectric material that exhibits a quasi-permanent electrical charge. Electrets are useful in a variety of devices including, e.g. cling films, air filters, filtering facepieces, and respirators, and as electrostatic elements in electro-acoustic devices such as microphones, headphones, and electrostatic recorders.

The performance of microfibrous webs used for aerosol filtration can be improved by imparting an electrical charge to the fibers, forming an electret material. In particular, electrets are effective in enhancing particle capture in aerosol filters. A number of methods are known for forming electret materials in microfibrous webs. Such methods include, for example, bombarding melt-blown fibers as they issue from the die orifices, as the fibers are formed, with electrically charged particles such as electrons or ions. Other methods include, for example, charging the fibers after the web is formed, by means of a corona discharge or imparting a charge to the fiber mat by means of carding and/or needle tacking (tribocharging). In addition, a method in which jets of water or a stream of water droplets impinge on a non-woven web at a pressure sufficient to provide filtration enhancing electret charge has also been described (hydrocharging).

A number of materials have been added to polymeric compositions to modify the properties of the polymeric composition. For example, in US Patent No. 5,914,186 (Yau et al.), heat-resistant anti-static pressure sensitive adhesive tapes are described that comprise a substrate having coated on it a microparticle adhesive having a diameter of at least 1 micrometer. The microparticles have a conductive coating formed from a polymer electrolyte base polymer, at least one ionic salt of an alkali or alkaline earth metal, and at least one thermal stabilizer selected from the group consisting of hindered amines, salts of substituted toluimidazoles, and mixtures thereof.

Examples of electrets that have additives added include electrets with antibacterial additives as described in Japanese Patent Publication JP 08284063 which describes N-n-butylcarbamic acid 3-9 iodo-2-propynyl ester containing either an amidine or guanidine group, and 2-(4-thiazolyl) benzimidazole, and PCT Publication WO 93/14510 which describes hindered amine compounds, nitrogenous hindered phenol compounds, metallic salt hindered phenol compounds, phenol compounds, sulfur compounds, and phosphorous compounds. Japanese Patent Publication JP 06254319 describes the use of metal salts of long chain organic acids in polyolefin electrets to lessen the attenuation of the electrification quantity. European Patent Publication No. EP 623,941 describes the use of Charge Control Agents from various chemical classes in polymer electrets. US Patent No. 5,871,845 (Dahringer et al.) describes electret fibers composed of a fiber-forming polymer or polycondensate and organic or organometallic charge control compounds as contained in toners for electrophotographic processes.

Also described are processes for producing high stability electrets, such as European Patent Publication No. EP 447,166 which describes a process for producing electrets comprising alternating at least two cycles of applying electric charge and subsequently heating, and also describes electrets containing polar high-molecular weight compounds, and US Patent No. 4,874,659 (Ando et al.) which describes a process comprising placing a fiber sheet between a non-contact voltage-applied electrode and an earth electrode and supplying electricity between the electrodes.

### Summary

Disclosed herein are electret webs containing charge-enhancing additives and uses thereof. The electric webs include a thermoplastic resin and a charge-enhancing additive comprising at least one substituted triazine phenolate salt.

In some embodiments, the charge-enhancing additive comprises a substituted triazine phenolate anion and a metal cation with the structure:

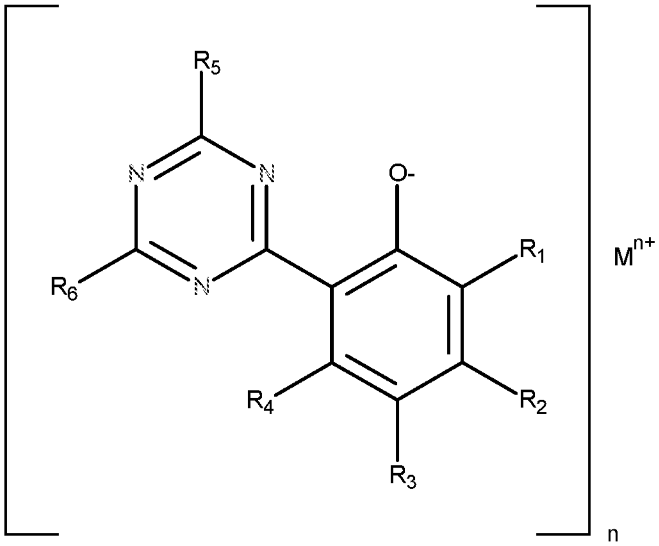

where $R^1$, $R^3$, and $R^4$ each independently comprises a hydrogen atom or a substituent group comprising an alkyl or substituted alkyl, or an aryl or a substituted aryl group, and $R^2$ is a substituent group comprising a halogen atom, an alkyl or substituted alkyl group, an alkenyl group, aryl or substituted aryl, or a group comprising an -O-$R^{11}$, a -N-$R^{11}R^{12}$ , a -B($OR^{13}$)($OR^{14}$), or a -Si$R^{15}$3, where $R^{11}$ comprises a hydrogen atom, an alkyl group, an alkenyl group, an aryl group, or a heteroatom-containing group comprising one or more oxygen, nitrogen, sulfur, or phosphorous atoms, and $R^{12}$ comprises a hydrogen atom, an alkyl group, an alkenyl group, an aryl group, or a heteroatom-containing group comprising one or more oxygen, nitrogen, sulfur, or phosphorous atoms, or $R^{11}$ and $R^{12}$ together with the atoms connecting form a heterocyclic ring structure, each $R^{13}$ and $R^{14}$ is independently a hydrogen atom, an alkyl group, an aryl group, or $R^{13}$ and $R^{14}$ together with the atoms connecting form a heterocyclic ring structure, and each $R^{15}$ group is an alkyl group, each $R^5$ and $R^6$ independently comprises a hydrogen atom, an alkyl group, a substituted alkyl group, an alkenyl group, an aryl group, a substituted aryl group, or a halogen atom; n is the valency of metal atom M and also is the stoichiometric number for the anionic portion of the salt, and is an integer of 1-4; and M comprises a transition metal or main group metal atom with a valency of n.

In some embodiments, the charge-enhancing additive comprises a substituted triazine phenolate anion and a metal cation with the structure:

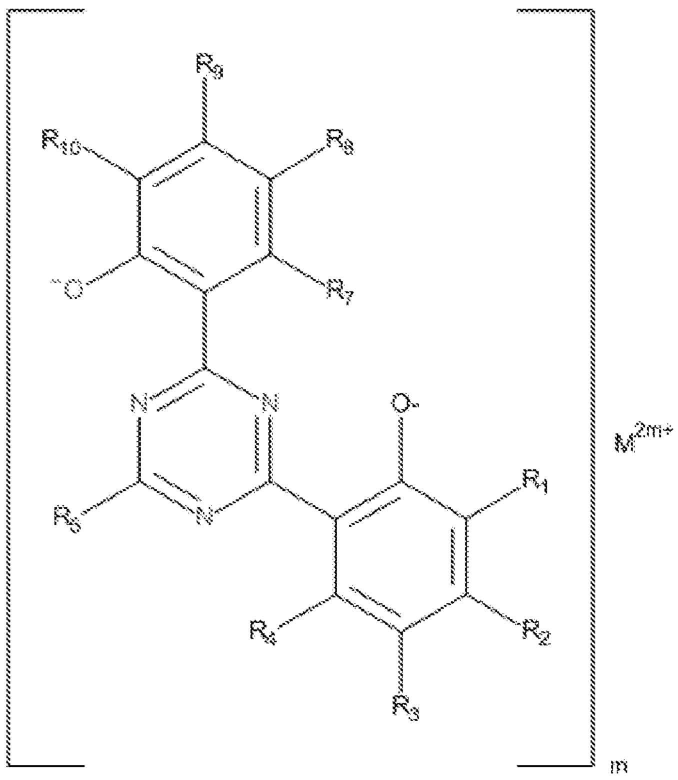

where each $R^1$, $R^3$, $R^4$, $R^5$, $R^7$, $R^8$, and $R^{10}$ independently comprises a hydrogen atom, an alkyl group, an alkenyl group, an aryl group, or a halogen atom; $R^2$ and $R^9$ independently comprises a hydrogen atom or a substituent group such that at least one of $R^2$ and $R^9$ is a substituent group comprising a halogen atom, an alkyl or substituted alkyl group, an alkenyl group, aryl or substituted aryl, or a group comprising an -O-$R^{11}$, a -N-$R^{11}R^{12}$ , a - B($OR^{13}$)($OR^{14}$), or a -Si$R^{15}$3, where $R^{11}$ comprises a hydrogen atom, an alkyl group, an alkenyl group, an aryl group, or a heteroatom-containing group comprising one or more oxygen, nitrogen, sulfur, or phosphorous atoms, and $R^{12}$ comprises a hydrogen atom, an alkyl group, an alkenyl group, an aryl group, or a heteroatom-containing group comprising one or more oxygen, nitrogen, sulfur, or phosphorous atoms, or $R^{11}$ and $R^{12}$ together with the atoms connecting form a heterocyclic ring structure, each $R^{13}$ and $R^{14}$ is independently a hydrogen atom, an alkyl group, an aryl group, or $R^{13}$ and $R^{14}$ together with the atoms connecting form a heterocyclic ring structure, and each $R^{15}$ group is an alkyl group; m = 0.5, 1, or 2; and M comprises a transition metal or main group metal atom with a valency of 2m such that M is lithium, sodium, or potassium when m = 0.5; M is calcium, magnesium, or cobalt when m = 1; and M is vanadium or titanium when m = 2.

## Detailed Description

The need remains for electret webs with improved properties. Presented in this disclosure are electret webs containing charge-enhancing additives. These charge-enhancing additives provide electret webs that are easy to charge by a variety of different charging mechanisms such as tribocharging, corona discharge, hydrocharging or a combination thereof. Electret webs useful in the present disclosure include a blend of a thermoplastic resin and a charge-enhancing additive. Webs prepared from such blends can show enhanced properties over webs prepared with the thermoplastic resins alone. Useful charge-enhancing additives include substituted triazine phenolate salts.

The electret webs may be in a variety of forms. For example the web may be a continuous or discontinuous film, or a fibrous web. Fibrous webs are particularly useful for the formation of filtration medium. In some embodiments the web is a non-woven microfibrous web. Typically microfibers are 1-100 micrometers, or more typically 2-30 micrometers in effective diameter (or average diameter if measured by a method such as scanning electron microscopy) and the microfibers need not have a circular cross-section.

The terms "a", "an", and "the" are used interchangeably with "at least one" to mean one or more of the elements being described.

The term "electret" refers to a material that exhibits a quasi-permanent electric charge. The electric charge may be characterized by a variety of techniques.

The term "alkyl" refers to a monovalent group that is a radical of an alkane, which is a saturated hydrocarbon. The alkyl can be linear, branched, cyclic, or combinations thereof and typically has 1 to 20 carbon atoms. In some

embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl (t-butyl), n-pentyl, n-hexyl, cyclohexyl, n-heptyl, n-octyl, and ethylhexyl.

The term "heteroalkyl" refers to an alkyl group which contains heteroatoms. These heteroatoms may be pendant atoms, for example, halogens such as fluorine, chlorine, bromine, or iodine or catenary atoms such as nitrogen, oxygen or sulfur. An example of a heteroalkyl group is a polyoxyalkyl group such as - $CH_2CH_2(OCH_2CH_2)_nOCH_2CH_3$.

The term "alkoxy" refers to a group with the general structure -O-R, where R is an alkyl group. The term "aryloxy" refers to a group with the general structure -O-R, where R is an aryl group. In some instances, the term alkoxy is used generically to describe both alkoxy and aryloxy groups.

The term "substituted alkyl" refers to an alkyl group which contains substituents along the hydrocarbon backbone. These substituents may be alkyl groups, heteroalkyl groups or aryl groups. An example of a substituted alkyl group is a benzyl group.

The term "alkenyl" refers to a monovalent group that is a radical of an alkene, which is a hydrocarbon with at least one carbon-carbon double bond. The alkenyl can be linear, branched, cyclic, or combinations thereof and typically contains 2 to 20 carbon atoms. In some embodiments, the alkenyl contains 2 to 18, 2 to 12, 2 to 10, 4 to 10, 4 to 8, 2 to 8, 2 to 6, or 2 to 4 carbon atoms. Exemplary alkenyl groups include ethenyl, n-propenyl, and n-butenyl.

The term "aryl" refers to an aromatic carbocyclic group that is a radical containing 1 to 5 rings which may be connected or fused. The aryl group may be substituted with alkyl or heteroalkyl groups. Examples of aryl groups include phenyl groups, naphthalene groups and anthracene groups. By "fused aromatic" ring it is meant a ring system comprising at least one aromatic ring joined by more than a single chemical bond to one or more other rings. In the present disclosure, the fused aromatic rings comprise at least one aromatic ring and one hetrocyclic ring.

The term "heterocyclic ring" refers to a carbocyclic ring which contains at least one heteroatom in or attached to the ring system.

The terms "polymer" and "polymeric material" refer to both materials prepared from one monomer such as a homopolymer or to materials prepared from two or more monomers such as a copolymer, terpolymer, or the like. Likewise, the term "polymerize" refers to the process of making a polymeric material that can be a homopolymer, copolymer, terpolymer, or the like. The terms "copolymer" and "copolymeric material" refer to a polymeric material prepared from at least two monomers.

The terms "room temperature" and "ambient temperature" are used interchangeably to mean temperatures in the range of 20°C to 25°C.

The term "hot melt processable" as used herein, refers to a composition that can transform, for example, by heat and pressure from a solid to a viscous fluid. The composition should be capable of being hot melt processed without being substantially chemically transformed, degraded or rendered unusable for the intended application.

Unless otherwise indicated, all numbers expressing feature sizes, amounts, and physical properties used in the specification and claims are to be understood as being modified in all instances by the term "about." Accordingly, unless indicated to the contrary, the numbers set forth are approximations that can vary depending upon the desired properties using the teachings disclosed herein.

Thermoplastic resins useful in the present disclosure include any thermoplastic nonconductive polymer capable of retaining a high quantity of trapped electrostatic charge when formed into a web and charged. Typically, such resins have a DC (direct current) resistivity of greater than $10^{14}$ ohm-cm at the temperature of intended use. Polymers capable of acquiring a trapped charge include polyolefins such as polypropylene, polyethylene, and poly-4-methyl-1-pentene; polyvinyl chloride; polystyrene; polycarbonates; polyesters, including polylactides; and perfluorinated polymers and copolymers. Particularly useful materials include polypropylene, poly-4-methyl-1-pentene, blends thereof or copolymers formed from at least one of propylene and 4-methyl-1-pentene.

Examples of suitable thermoplastic resins include, for example, the polypropylene resins: ESCORENE PP 3746G commercially available from Exxon-Mobil Corporation, Irving, TX; TOTAL PP3960, TOTAL PP3860, and TOTAL PP3868 commercially available from Total Petrochemicals USA Inc., Houston, TX; and METOCENE MF 650W commercially available from LyondellBasell Industries, Inc., Rotterdam, Netherlands; and the poly-4-methyl-1-pentene resin TPX-MX002 commercially available from Mitsui Chemicals, Inc., Tokyo, Japan.

Phenolate salts are used as charge enhancing agents for electret webs. Triazine phenols are known and used as UV light absorbers, but triazine phenol salts are far less common and have been studied far less than the triazine phenols from which they are made.

Among the compositions disclosed herein are compositions of matter comprising salts that are a substituted triazine phenolate anion and a metal cation with the structure of Formula I:

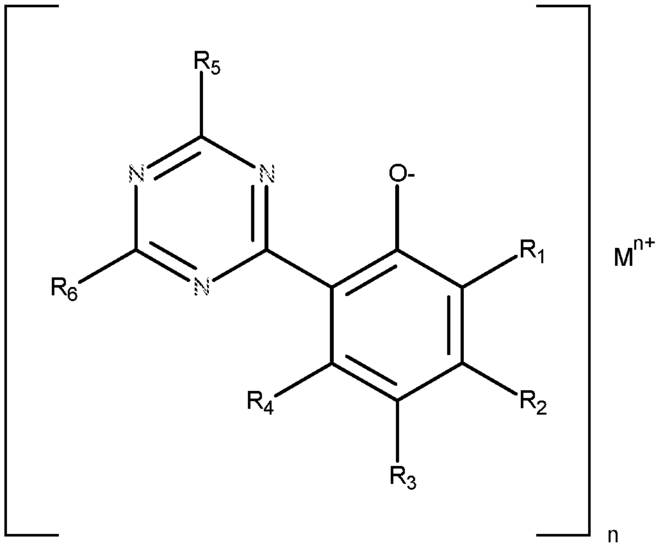

Formula I

where $R^1$, $R^3$, and $R^4$ each independently comprises a hydrogen atom or a substituent group comprising an alkyl or substituted alkyl, or an aryl or a substituted aryl group, and $R^2$ is a substituent group comprising a halogen atom, an alkyl or substituted alkyl group, an alkenyl group, aryl or substituted aryl, or a group comprising an -O-$R^{11}$, a -N-$R^{11}R^{12}$ , a -B($OR^{13}$)($OR^{14}$), or a -Si$R^{15}$3, where $R^{11}$ comprises a hydrogen atom, an alkyl group, an alkenyl group, an aryl group, or a heteroatom-containing group comprising one or more oxygen, nitrogen, sulfur, or phosphorous atoms, and $R^{12}$ comprises a hydrogen atom, an alkyl group, an alkenyl group, an aryl group, or a heteroatom-containing group comprising one or more oxygen, nitrogen, sulfur, or phosphorous atoms, or $R^{11}$ and $R^{12}$ together with the atoms connecting form a heterocyclic ring structure, each $R^{13}$ and $R^{14}$ is independently a hydrogen atom, an alkyl group, an aryl group, or $R^{13}$ and $R^{14}$ together with the atoms connecting form a heterocyclic ring structure, and each $R^{15}$ group is an alkyl group, each $R^5$ and $R^6$ independently comprises a hydrogen atom, an alkyl group, a substituted alkyl group, an alkenyl group, an aryl group, a substituted aryl group, or a halogen atom; n is the valency of metal atom M and also is the stoichiometric number for the anionic portion of the salt, and is an integer of 1-4; and M comprises a transition metal or main group metal atom with a valency of n. In some embodiments, where n = 1, M comprises lithium, sodium, or potassium. The value n also refers to the stoichiometry of the anionic portion of the salt. If the valency of M is greater than 1, the metal cation is complexed with n anionic portions.

In many embodiments of Formula I, at least one of $R^2$, $R^5$, or $R^6$ comprises a substituent group, that is to say a group other than a hydrogen atom. In many embodiments, each of $R^2$, $R^5$, and $R^6$ comprise substituent groups. In some embodiments $R^1$, $R^3$, and $R^4$ are not substituted i.e. each of $R^1$, $R^3$, and $R^4$ comprises a hydrogen atom. In some embodiments, $R^2$ comprises an alkoxy, substituted alkoxy, or aryloxy group comprising 1-20 carbon atoms, and each $R^1$, $R^3$, and $R^4$, independently comprises a hydrogen atom, an alkyl group, an alkenyl group, an aryl group, or a halogen atom. In many embodiments, $R^5$ and $R^6$ comprise substituent groups that may be the same or different, and comprise an aryl or substituted aryl group.

In one embodiment, $R^2$ comprises an alkoxy group with 1-10 carbon atoms, in some embodiments 6 carbon atoms, each $R^1$, $R^3$, and $R^4$, independently comprises a hydrogen atom, and $R^5$ and $R^6$ each independently comprises an aryl or substituted aryl group, in some embodiments each of $R^5$ and $R^6$ comprises a phenyl group. In another embodiment, $R^2$ comprises a substituted alkoxy group with 1-12 carbon atoms, in some embodiments an alkyl ester-substituted alkoxy group, and each $R^1$, $R^3$, and $R^4$, independently comprises a hydrogen atom, and $R^5$ and $R^6$ each independently comprises an aryl or substituted aryl group, in some embodiments each of $R^5$ and $R^6$ comprises a phenyl-substituted phenyl group..

In some embodiments of the salt of Formula I, the $R^6$ group is a substituent group that is phenolate anion. Examples of this second type of compound are described by Formula II below:

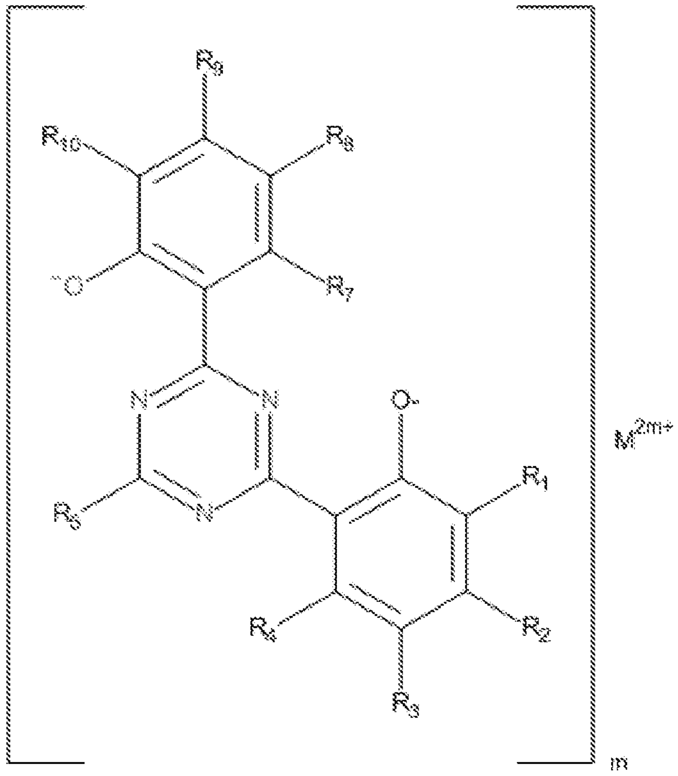

Formula II

In Formula II each $R^1$, $R^3$, $R^4$, $R^5$, $R^7$, $R^8$, and $R^{10}$ independently comprises a hydrogen atom, an alkyl group, an alkenyl group, an aryl group, or a halogen atom; $R^2$ and $R^9$ independently comprises a hydrogen atom or a substituent group such that at least one of $R^2$ and $R^9$ is a substituent group comprising a halogen atom, an alkyl or substituted alkyl group, an alkenyl group, aryl or substituted aryl, or a group comprising an $-O-R^{11}$, a $-N-R^{11}R^{12}$ , a $-B(OR^{13})(OR^{14})$, or a $-SiR^{15}3$, where $R^{11}$ comprises a hydrogen atom, an alkyl group, an alkenyl group, an aryl group, or a heteroatom-containing group comprising one or more oxygen, nitrogen, sulfur, or phosphorous atoms, and $R^{12}$ comprises a hydrogen atom, an alkyl group, an alkenyl group, an aryl group, or a heteroatom-containing group comprising one or more oxygen, nitrogen, sulfur, or phosphorous atoms, or $R^{11}$ and $R^{12}$ together with the atoms connecting form a heterocyclic ring structure, each $R^{13}$ and $R^{14}$ is independently a hydrogen atom, an alkyl group, an aryl group, or $R^{13}$ and $R^{14}$ together with the atoms connecting form a heterocyclic ring structure, and each $R^{15}$ group is an alkyl group; m = 0.5, 1, or 2; and M comprises a transition metal or main group metal atom with a valency of 2m such that M is lithium, sodium, or potassium when m = 0.5; M is calcium, magnesium, or cobalt when m = 1; and M is vanadium or titanium when m = 2.

In some embodiments, the compound of Formula II has each $R^1$, $R^3$, $R^4$, $R^7$, $R^8$, and $R^{10}$ independently comprising a hydrogen atom, $R^5$ comprises a substituted aryl group, and each $R^2$ and $R^9$ comprises a group comprising an $-O-R^{11}$ where $R^{11}$ comprises an alkyl group with 1-8 carbon atoms. In a particular embodiment, the compound of Formula II has each $R^1$, $R^3$, $R^4$, $R^7$, $R^8$, and $R^{10}$ independently comprising a hydrogen atom, $R^5$ comprises a substituted aryl group of 3-methoxy phenyl, and each $R^2$ and $R^9$ comprises a group comprising an $-O-R^{11}$ where $R^{11}$ comprises a branched alkyl group with 8 carbon atoms. The corresponding bis-phenol compound is commercially available from BASF as TINOSORB-S.

The charge-enhancing additive or combination of additives can be added in any suitable amount. The charge-enhancing additives of this disclosure have been shown to be effective even in relatively small quantities. Typically the charge-enhancing additive or combination of additives is present in a thermoplastic resin and charge-enhancing additive or additives blend in amounts of up to about 10 % by weight, more typically in the range of 0.02 to 5 % by weight based upon the total weight of the blend. In some embodiments, the charge-enhancing additive or combination of additives is present in an amount ranging from 0.1 to 3 % by weight, 0.1 to 2% by weight, 0.2 to 1.0 % by weight, or 0.25 to 0.5 % by weight.

The blend of the thermoplastic resin and the charge-enhancing additive or combination of additives can be prepared by well-known methods. Typically, the blend is processed using melt extrusion techniques, so the blend may be preblended to form pellets in a batch process, or the thermoplastic resin and the charge-enhancing additive or additives may be mixed in the extruder in a continuous process. Where a continuous process is used, the thermoplastic resin and

the charge-enhancing additive or additives may be pre-mixed as solids or added separately to the extruder and allowed to mix in the molten state.

Examples of melt mixers that may be used to form preblended pellets include those that provide dispersive mixing, distributive mixing, or a combination of dispersive and distributive mixing. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CT). After batch mixing, the mixture created may be immediately quenched and stored below the melting temperature of the mixture for later processing.

Examples of continuous methods include single screw extruding, twin screw extruding, disk extruding, reciprocating single screw extruding, and pin barrel single screw extruding. The continuous methods can include utilizing both distributive elements, such as cavity transfer mixers (e.g. CTM, commercially available from RAPRA Technology, Ltd.; Shrewsbury, England) and pin mixing elements, static mixing elements or dispersive mixing elements (commercially available from e.g., MADDOCK mixing elements or SAXTON mixing elements).

Examples of extruders that may be used to extrude preblended pellets prepared by a batch process include the same types of equipment described above for continuous processing. Useful extrusion conditions are generally those which are suitable for extruding the resin without the additive.

The extruded blend of thermoplastic resin and charge-enhancing additive or additives may be cast or coated into films or sheets or may be formed into a fibrous web using any suitable techniques. Films can be made into a variety of articles including filtration media by the methods described in, for example, US Patent No. 6,524,488 (Insley et al.). Fibrous webs can be made from a variety of fiber types including, for example, melt-blown microfibers, staple fibers, fibrillated films, and combinations thereof. Techniques for preparing fibrous webs include, for example, air laid processes, wet laid processes, hydro-entanglement, spunbond processes, melt-blown processes, and combinations thereof. Melt-blown and spunbond, non-woven microfibrous webs are particularly useful as filtration media.

Melt-blown and spunbond, non-woven microfibrous electret filters are especially useful as an air filter element of a respirator, such as a filtering facepiece, or for such purposes as home and industrial air-conditioners, air cleaners, vacuum cleaners, medical air line filters, and air conditioning systems for vehicles and common equipment, such as computers, computer disk drives and electronic equipment. In some embodiments, the electret filters are combined with a respirator assembly to form a respiratory device designed to be used by a person. In respirator uses, the electret filters may be in the form of molded, pleated, or folded half-face respirators, replaceable cartridges or canisters, or prefilters.

Melt-blown microfibers useful in the present disclosure can be prepared as described in Van A. Wente, "Superfine Thermoplastic Fibers," Industrial Engineering Chemistry, vol. 48, pp. 1342-1346 and in Report No. 4364 of the Naval Research Laboratories, published May 25, 1954, entitled "Manufacture of Super Fine Organic Fibers" by Van A. Wente et al.

Spunbond microfibers may be formed using a spunbond process in which one or more continuous polymeric free-fibers are extruded onto a collector, as described, for example, in US Patent Nos. 4,340,563 and 8,162,153 and US Patent Publication No. 2008/0038976.

Useful melt-blown and spunbond microfibers for fibrous electret filters typically have an effective fiber diameter (EFD) of from about 1-100 micrometers, more typically 2 to 30 micrometers, in some embodiments from about 7 to 15 micrometers, as calculated according to the method set forth in Davies, C. N., "The Separation of Airborne Dust and Particles," Institution of Mechanical Engineers, London, Proceedings 1B, 1952.

Staple fibers may also be present in the web. The presence of staple fibers generally provides a more lofty, less dense web than a web of only blown microfibers. Generally, no more than about 90 weight percent staple fibers are present, more typically no more than about 70 weight percent. Examples of webs containing staple fiber are disclosed in U.S. Pat. No. 4,118,531 (Hauser).

Sorbent particulate material such as activated carbon or alumina may also be included in the web. Such particles may be present in amounts up to about 80 volume percent of the contents of the web. Examples of particle-loaded webs are described, for example, in U.S. Pat. No. 3,971,373 (Braun), U.S. Pat. No. 4,100,324 (Anderson) and U.S. Pat. No. 4,429,001 (Kolpin et al.).

Various optional additives can be blended with the thermoplastic composition including, for example, pigments, light stabilizers, primary and secondary antioxidants, metal deactivators, hindered amines, hindered phenols, fatty acid metal salts, triester phosphites, phosphoric acid salts, fluorine-containing compounds, nucleating agents, and combinations thereof. In addition, antioxidants in some instances can also function as charge enhancing additives. Possible charge additives include thermally stable organic triazine compounds or oligomers, which compounds or oligomers contain at least one nitrogen atom in addition to those in the triazine ring, see, for example, U.S. Patents 6,268,495, 5,976,208, 5,968,635, 5,919,847, and 5,908,598 to Rousseau et al. Another additive known to enhance electrets is "CHIMASSORB 944: (poly[[6-(1,1,3,3,-tetramethylbutyl) amino]-s-triazine-2,4-diyl][[(2,2,6,6-tetramethyl-4-piperidyl) imino] hexamethylene [(2,2,6,6-tetramethyl-4-piperidyl) imino]]), available from BASF, Ludwigshafen, Germany. The charge-enhancing additives may be N-substituted amino aromatic compounds, particularly tri-amino substituted compounds, such as 2,4,6-trianilino-p-(carbo-2'-ethylhexyl-1'-oxy)-1,3,5-triazine commercially available as "UVINUL T-150" from BASF, Ludwigshafen, Germany. Another charge additive is 2,4,6-tris-(octadecylamino)-triazine, also known as tristearyl melamine ("TSM"). Further examples of charge-enhancing additives are provided in U.S. Patent Application Serial No. 61/058,029, U.S. Patent Application Serial No. 61/058,041, US Patent No. 7,390,351 (Leir et al.), US Patent No. 5,057,710 (Nishiura et al.), and US Patent Nos. 4,652,282 and 4,789,504 (Ohmori et al.).

In addition the web may be treated to chemically modify its surface. Surface fluorination can be achieved by placing a polymeric article in an atmosphere that contains a fluorine-containing species and an inert gas and then applying an electrical discharge to modify the surface chemistry of the polymeric article. The electrical discharge may be in the form of a plasma such as an AC corona discharge. This plasma fluorination process causes fluorine atoms to become present on the surface of the polymeric article. The plasma fluorination process is described in a number of U.S. Patents: 6,397,458, 6,398,847, 6,409,806, 6,432,175, 6,562,112, 6,660,210, and 6,808,551 to Jones/Lyons et al. Electret articles that have a high fluorosaturation ratio are described in U.S. Patent 7,244,291 to Spartz et al., and electret articles that have a low fluorosaturation ratio, in conjunction with heteroatoms, is described in U.S. Patent 7,244,292 to Kirk et al. Other publications that disclose fluorination techniques include: U.S. Pat. Nos. 6,419,871, 6,238,466, 6,214,094, 6,213,122, 5,908,598, 4,557,945, 4,508,781, and 4,264,750; U.S. Publications US 2003/0134515 A1 and US 2002/0174869 A1; and International Publication WO 01/07144.

The electret filter media prepared according to the present disclosure generally have a basis weight (mass per unit area) in the range of about 10 to 500 $g/m^2$, and in some embodiments, about 10 to 100 $g/m^2$. In making melt-blown microfiber webs, the basis weight can be controlled, for example, by changing either the collector speed or the die throughput. The thickness of the filter medium is typically about 0.25 to 20 millimeters, and in some embodiments, about 0.5 to 2 millimeters. Multiple layers of fibrous electret webs are commonly used in filter elements. The solidity of the fibrous electret web typically is about 1% to 25%, more typically about 3% to 10%. Solidity is a unitless parameter that defines the solids fraction of the web. Generally the methods of this disclosure provide electret webs with generally uniform charge distribution throughout the web without regard to basis weight, thickness, or solidity of the medium. The electret filter medium and the resin from which it is produced should not be subjected to any unnecessary treatment which might increase its electrical conductivity, e.g., exposure to ionizing radiation, gamma rays, ultraviolet irradiation, pyrolysis, oxidation, etc.

The electret web may be charged as it is formed or the web may be charged after the web is formed. In electret filter medium, the medium is generally charged after the web is formed. In general, any standard charging method known in the art may be used. For example, charging may be carried out in a variety of ways, including tribocharging, corona discharge and hydrocharging. A combination of methods may also be used. As mentioned above, in some embodiments, the electret webs of this disclosure have the desirable feature of being capable of being charged by corona discharge alone, particularly DC corona discharge, without the need of additional charging methods.

Examples of suitable corona discharge processes are described in U.S. Pat. Re. No. 30,782 (van Turnhout), U.S. Pat. Re. No. 31,285 (van Turnhout), U.S. Pat. Re. No. 32,171 (van Turnhout), U.S. Pat. No. 4,215,682 (Davis et al.), U.S. Pat. No. 4,375,718 (Wadsworth et al.), U.S. Pat. No. 5,401,446 (Wadsworth et al.), U.S. Pat. No. 4,588,537 (Klaase et al.), U.S. Pat. No. 4,592,815 (Nakao), and US Pat. No. 6,365,088 (Knight et al.).

Another technique that can be used to charge the electret web is hydrocharging. Hydrocharging of the web is carried out by contacting the fibers with water in a manner sufficient to impart a charge to the fibers, followed by drying of the web. One example of hydrocharging involves impinging jets of water or a stream of water droplets onto the web at a pressure sufficient to provide the web with filtration enhancing electret charge, and then drying the web. The pressure necessary to achieve optimum results varies depending on the type of sprayer used, the type of polymer from which the web is formed, the type and concentration of additives to the polymer, the thickness and density of the web and whether pre-treatment, such as corona surface treatment, was carried out prior to hydrocharging. Generally, water pressures in the range of about 10 to 500 psi (69 to 3450 kPa) are suitable. The jets of water or stream of water droplets can be provided by any suitable spray device. One example of a useful spray device is the apparatus used for hydraulically entangling fibers. An example of a suitable method of hydrocharging is described in US Patent No. 5,496,507 (Angadjivand et al.). Other methods are described in US Patent No. 6,824,718 (Eitzman et al.), US Patent No. 6,743,464 (Insley et al.), US Patent No. 6,454,986 (Eitzman et al.), US Patent No. 6,406,657 (Eitzman et al.), and US Patent No. 6,375,886 (Angadjivand et al.). The hydrocharging of the web may also be carried out using the method disclosed in the US Patent No. 7,765,698 (Sebastian et al.).

To assess filtration performance, a variety of filtration testing protocols has been developed. These tests include measurement of the aerosol penetration of the filter web using a standard challenge aerosol such as dioctylphthalate (DOP), which is usually presented as percent of aerosol penetration through the filter web (% Pen) and measurement of the pressure drop across the filter web ($\Delta P$). From these two measurements, a quantity known as the Quality Factor (QF) may be calculated by the following equation:

$$QF = - \ln(\% \text{ Pen}/100)/ \Delta P,$$

where In stands for the natural logarithm. A higher QF value indicates better filtration performance, and decreased QF values effectively correlate with decreased filtration performance. Details for measuring these values are presented in the Examples section. Typically, the filtration medium of this disclosure have measured QF values of 0.3 (mm of $H_2O)^{-1}$ or greater at a face velocity of 6.9 centimeters per second.

To verify that a particular filter medium is electrostatically charged in nature, one may examine its performance before and after exposure to ionizing X-ray radiation. As described in the literature, for example, Air Filtration by R.C. Brown (Pergamon Press, 1993) and "Application of Cavity Theory to the Discharge of Electrostatic Dust Filters by X-Rays", A. J. WAKER and R. C. BROWN, Applied Radiation and Isotopes, Vol. 39, No. 7, pp. 677-684, 1988, if an electrostatically charged filter is exposed to X-rays, the penetration of an aerosol through the filter will be greater after exposure than before exposure, because the ions produced by the X-rays in the gas cavities between the fibers will have neutralized some of the electric charge. Thus, a plot of penetration against cumulative X-ray exposure can be obtained which shows a steady increase up to a constant level after which further irradiation causes no change. At this point all of the charge has been removed from the filter.

These observations have led to the adoption of another testing protocol to characterize filtration performance, the X-ray Discharge Test. In this testing protocol, select pieces of the filter medium to be tested are subjected to X-ray radiation to discharge the electret web. One attribute of this test is that it confirms that the web is an electret. Because it is known that X-rays quench electret charge, exposure of a filter medium to X-rays and measuring the filter performance before and after this exposure and comparing the filter performances indicates whether the filter medium is an electret. If the filter performance is unchanged after exposure to X-ray radiation, that is indicative that no charge was quenched and the material is not an electret. However, if the filter performance diminishes after exposure to X-ray radiation, that is indicative that the filter medium is an electret.

When the test is run, typically, the filtration performance is measured before and after exposure of the filter medium to the X-ray radiation as described in detail in US Patent No. 8,790,449. A % Penetration Ratio can be calculated according to the following equation: % Penetration Ratio = (ln(initial % DOP Penetration/100)/(ln(% DOP Penetration after 60 min of X-ray exposure/100)))xl00, when tested according to the Filtration Performance Test Method, as described in the Examples section below. In order for the web to have sufficient charge for use as a filter, the % Penetration Ratio is typically at least 300%. As the % Penetration Ratio increases, the filtration performance of the web also increases. In some embodiments, the % Penetration Ratio is at least 400%, 500%, or 600%. In preferred embodiments, the % Penetration Ratio is at least 750% or 800%. In some embodiments, the web exhibits a % Penetration Ratio of at least 1000%, or at least 1250%.

The initial Quality Factor (prior to exposure to X-rays) is typically at least 0.3 (mm of $H_2O)^{-1}$, more typically at least 0.4 or even 0.5 (mm of $H_2O)^{-1}$ for a face velocity of 6.9 cm/s when tested according to the Filtration Performance Test Method, as described in the Examples section below. In some embodiments, the initial Quality Factor is at least 0.6 or 0.7 (mm of $H_2O)^{-1}$. In other embodiments, the initial Quality Factor is at least 0.8, at least 0.90, at least 1.0, or even greater than 1.0 (mm of $H_2O)^{-1}$. The Quality Factor after 60 minutes exposure to X-rays is typically less than 50% of the initial Quality Factor. In some embodiments, the initial Quality Factor is at least 0.5 (mm of $H_2O)^{-1}$ or greater and the Quality Factor after 60 minutes exposure to X-rays is less than 0.15 (mm of $H_2O)^{-1}$.

## Examples

These examples are merely for illustrative purposes only and are not meant to be limiting on the scope of the appended claims. All parts, percentages, ratios, etc. in the examples and the rest of the specification are by weight, unless noted otherwise.

Solvents were EMD (OmniSolv grade) and were used with no further purification. Solvents that were used in separations, isolations, chromatography, and other general use were obtained from EMD (Omnisolv Grade).

The following abbreviations are used throughout the Examples: hr = hours; g = grams; m = meters; cm = centimeters; mm = millimeters; in = inches; mg = milligrams; RBF = round bottom flask; and lb = pounds.

## Structural Formulas of Phenol Compounds Disclosed.

The table below presents a summary of the structural formulas for the phenol compounds used in this application to prepare phenolate salts. The phenols are either commercially available or can be prepared by methods described in the Synthesis Examples below.

| Name | Source | Structure |
|---|---|---|
| Phenol-1 | Commercially available | 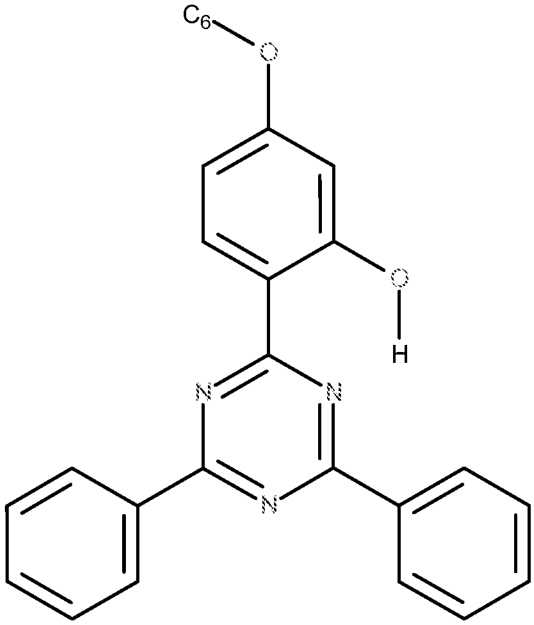 |
| Phenol-2 | Commercially Available | 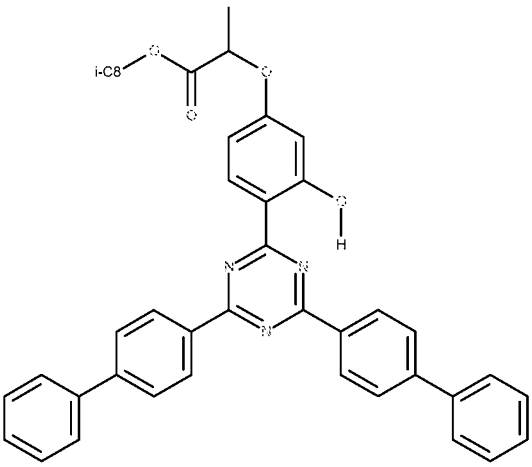 |

## General Synthesis of Phenolate Salts

The above described phenols were used to prepare phenolate salts using the route described below. The phenolate salts formed are summarized in Table 1 below by a listing of the metal cations for the prepared salts.

Phenolic starting material was added to THF at 10 -40% by weight in a two-necked RBF equipped with a magnetic stir bar, condenser and addition funnel. The solution was stirred and heated to reflux until all of the phenolic starting material was dissolved under nitrogen. A stoichiometric amount of metal alkoxide stock solution was added dropwise from the addition funnel to the RBF under nitrogen. The solution was refluxed from 1 to 36 hours. The solution was stripped with reduced pressure, and the recovered powder was dried in under vacuum.

## Materials

The following is a table of commercially available materials and reagents that were used.

| Compound | Supplier |
|---|---|
| **Bases** | |
| $Li(OCH_3)$ | Sigma-Aldrich |
| $Na(OCH_2CH_3)$ | Alfa-Aesar |

The following is a table of commercially available materials and reagents that were used to prepare the phenolate salts

Table 1: Phenolate Salts

| Phenol | Trade Name | Source | Phenolate Salts Prepared (Metal cation) |
|---|---|---|---|
| Phenol-1 | TINUVIN 1577 | TCI | Li , Na |
| Phenol-2 | TINUVIN 479 | BASF | Na |

**Preparation of Electret Webs and Electret Films**

A series of electret articles in non-woven form were prepared by compounding a polymeric resin or polymeric resin with phenolate salts.

Table 2: Materials Used for Resin Compounding

| Material Name | Trade Name | Source | Description |
|---|---|---|---|
| **Polymer Resins** | | | |
| PP1 | MF-650X | LyondellBasell | Polypropylene |

**Examples 1 - 12 and Comparative Examples CE1-CE9: Electret Webs**

A series of Non-Woven Webs were Prepared, Charged and Tested. The prepared webs are summarized in Table 3. In Table 3 the phenolate salts are described by the phenol and the metal cation, for example the sodium salt of Phenol-1 is described in the table as: Phenol 1-Na. Comparative webs were also prepared with the resin alone or the resin with a phenol additive or other additive and no phenolate salt. Comparative Webs are described by the descriptor CE.

**Non-woven Sample Preparation**

Step A: Preparation of Microfiber Non-woven Webs

Process A:

For each Example, one of the Charging Additives described above was selected and dry blended with polypropylene at the concentration shown in Table 3, and the blend was extruded as described in Van A. Wente, "Superfine Thermoplastic Fibers," Industrial Engineering Chemistry, vol. 48, pp. 1342-1346. The extrusion temperature ranged from about 250°C - 300°C and the extruder was a BRABENDER conical twin-screw extruder (commercially available from Brabender Instruments, Inc.) operating at a rate of about 2.5 to 3 kg/hr (5-7 lb/hr). The die was 25.4 cm (10 in) wide with 10 holes per centimeter (25 holes per inch). Melt-blown webs were formed having basis weights of about 50-60 $g/m^2$, effective fiber diameters of about 6.5 - 9.5 micrometers and a thicknesses of about 0.75 - 2 millimeters.

Step B - Electret Preparation:

Each of the melt-blown webs prepared was charged by one of three electret charging methods: corona charging, corona pre-treatment and hydrocharging, or hydrocharging. Table 4 summarizes the specific charging method applied to each of the samples.

Charging Method 1 - Corona Charging:

The selected melt-blown webs or films prepared above were charged by DC corona discharge. The corona charging was accomplished by passing the web on a grounded surface under a corona brush source with a corona current of about 0.01 milliamp per centimeter of discharge source length at a rate of about 3 centimeters per second. The corona source was about 3.5 centimeters above the grounded surface on which the web was carried. The corona source was driven by a positive DC voltage.

Charging Method 2 - Corona Pre-treatment and Hydrocharging:

The selected melt-blown webs prepared in Step A above were pretreated by DC corona discharge as described in Charging Method 1 and then charged by hydrocharging as described in Charging Method 3.

Charging Method 3 - Hydrocharging:

A fine spray of high purity water having a conductivity of less than 5 microS/cm was continuously generated from a nozzle operating at a pressure of 896 kiloPascals (130 psig) and a flow rate of approximately 1.4 liters/minute. The selected melt-blown webs prepared in Step A were conveyed by a porous belt through the water spray at a speed of approximately 10 centimeters/second while a vacuum simultaneously drew the water through the web from below. Each melt-blown web was run through the hydrocharger twice (sequentially once on each side) and then allowed to dry completely overnight prior to filter testing.

Likewise, for each Comparative Example, a melt-blown web was prepared from the same grade of polypropylene as the corresponding Examples web, but no charge additive was added. Table 3 summarizes the specific web characteristics for each of the examples.

**Filtration Performance Test Method, Non-woven melt-blown microfiber webs**

The samples were tested for %DOP aerosol penetration (% Pen) and pressure drop ($\Delta P$), and the quality factor (QF) was calculated from these two values. The filtration performance (% Pen and QF) of the nonwoven microfiber webs were evaluated using an Automated Filter Tester AFT Model 8127 (available from TSI, Inc., St. Paul, MN) using dioctylphthalate (DOP) as the challenge aerosol and a MKS pressure transducer that measured pressure drop ($\Delta P$ (mm of $H_2O$)) across the filter. The DOP aerosol was nominally a monodisperse 0.33 micrometer mass median (MMD) diameter having an upstream concentration of 50-200 mg/$m^3$ and a target of 100 mg/$m^3$. The aerosol was forced through a sample of filter media at a calibrated flow rate of either 42.5 liters/minute (face velocity of 6.9 cm/s) for webs made by Process A or 85 liters/minute (face velocity of 13.8 cm/s) for webs made by Process B. The aerosol ionizer turned off for these tests. The total testing time was 23 seconds (rise time of 15 seconds, sample time of 4 seconds, and purge time of 4 seconds). The concentration of DOP aerosols was measured by light scattering both upstream and downstream of the filter media using calibrated photometers. The DOP % Pen is defined as: % Pen = 100×(DOP concentration downstream/DOP concentration upstream). For each material, 6 separate measurements were made at different locations on the melt-blown web and the results were averaged.

The % Pen and $\Delta P$ were used to calculate a QF by the following formula:

$$QF = -\ln(\%\ Pen/100)/\ \Delta P,$$

where In stands for the natural logarithm. A higher QF value indicates better filtration performance and decreased QF values effectively correlate with decreased filtration performance. For webs formed by Process B, webs were tested as a two layer laminate.

The performance data are summarized in Table 4.

Table 3

| Example | Resin | Phenol | Metal | (wt %) | EFD (microns) | basis wt (g/$m^2$) | Solidity (%) |
|---|---|---|---|---|---|---|---|
| CE-1 | PP1 | | | | 8.1 | 58 | 6.3 |
| CE-2 | PP1 | | | | 8.1 | 58 | 6.3 |
| CE-3 | PP1 | | | | 8.1 | 58 | 6.3 |
| CE-4 | PP1 | Phenol-1 | ---- | 0.10 | 8.3 | 58 | 7.0 |

(continued)

| Example | Resin | Phenol | Metal | (wt %) | EFD (microns) | basis wt (g/m$^2$) | Solidity (%) |
|---|---|---|---|---|---|---|---|
| CE-5 | PP1 | Phenol-1 | ---- | 0.10 | 8.3 | 58 | 7.0 |
| CE-6 | PP1 | Phenol-1 | ---- | 0.10 | 8.3 | 58 | 7.0 |
| CE-7 | PP1 | Phenol-1 | ---- | 1.00 | 7.7 | 59 | 6.4 |
| CE-8 | PP1 | Phenol-1 | ---- | 1.00 | 7.7 | 59 | 6.4 |
| CE-9 | PP1 | Phenol-1 | ---- | 1.00 | 7.7 | 59 | 6.4 |
| Ex1 | PP1 | Phenol-1 | Li | 0.10 | 8.1 | 58 | 6.9 |
| Ex2 | PP1 | Phenol-1 | Li | 0.10 | 8.1 | 58 | 6.9 |
| Ex3 | PP1 | Phenol-1 | Li | 0.10 | 8.1 | 58 | 6.9 |
| Ex4 | PP1 | Phenol-1 | Li | 1.00 | 8.0 | 58 | 6.2 |
| Ex5 | PP1 | Phenol-1 | Li | 1.00 | 8.0 | 58 | 6.2 |
| Ex6 | PP1 | Phenol-1 | Li | 1.00 | 8.0 | 58 | 6.2 |
| Ex7 | PP1 | Phenol-2 | Li | 0.75 | 8.0 | 59 | 7.3 |
| Ex8 | PP1 | Phenol-2 | Li | 0.75 | 8.0 | 59 | 7.3 |
| Ex9 | PP1 | Phenol-2 | Li | 0.75 | 8.0 | 59 | 7.3 |
| Ex11 | PP1 | Phenol-1 | Na | 0.20 | 8.0 | 60 | 6.3 |
| Ex12 | PP1 | Phenol-1 | Na | 0.20 | 8.0 | 60 | 6.3 |

Table 4

| Example | Resin | Charging Process | $\Delta$P (mmH$_2$ ) | %P | QF |
|---|---|---|---|---|---|
| CE-1 | PP1 | 1 | 2.50 | 19.10 | 0.65 |
| CE-2 | PP1 | 2 | 2.40 | 8.09 | 1.05 |
| CE-3 | PP1 | 3 | 2.23 | 31.85 | 0.52 |
| CE-4 | PP1 | 1 | 3.20 | 11.90 | 0.67 |
| CE-5 | PP1 | 2 | 2.92 | 9.72 | 0.80 |
| CE-6 | PP1 | 3 | 2.88 | 35.93 | 0.36 |
| CE-7 | PP1 | 1 | 3.60 | 11.10 | 0.61 |
| CE-8 | PP1 | 2 | 3.17 | 9.80 | 0.74 |
| CE-9 | PP1 | 3 | 3.35 | 21.22 | 0.47 |
| Ex1 | PP1 | 1 | 2.90 | 16.00 | 0.64 |
| Ex2 | PP1 | 2 | 2.52 | 7.32 | 1.05 |
| Ex3 | PP1 | 3 | 2.58 | 25.98 | 0.52 |
| Ex4 | PP1 | 1 | 2.82 | 11.40 | 0.77 |
| Ex5 | PP1 | 2 | 2.47 | 1.39 | 1.76 |
| Ex6 | PP1 | 3 | 2.37 | 6.78 | 1.14 |
| Ex7 | PP1 | 1 | 2.97 | 12.90 | 0.69 |
| Ex8 | PP1 | 2 | 2.63 | 5.52 | 1.10 |
| Ex9 | PP1 | 3 | 2.65 | 15.53 | 0.71 |
| Ex11 | PP1 | 1 | 2.00 | 21.72 | 0.77 |
| Ex12 | PP1 | 2 | 1.92 | 9.20 | 1.25 |

## Claims

**1.** An electret web comprising:

a thermoplastic resin; and
a charge-enhancing additive comprising at least one substituted triazine phenolate salt.

**2.** The electret web of claim 1, wherein the charge-enhancing additive comprises a substituted triazine phenolate anion

and a metal cation with the structure:

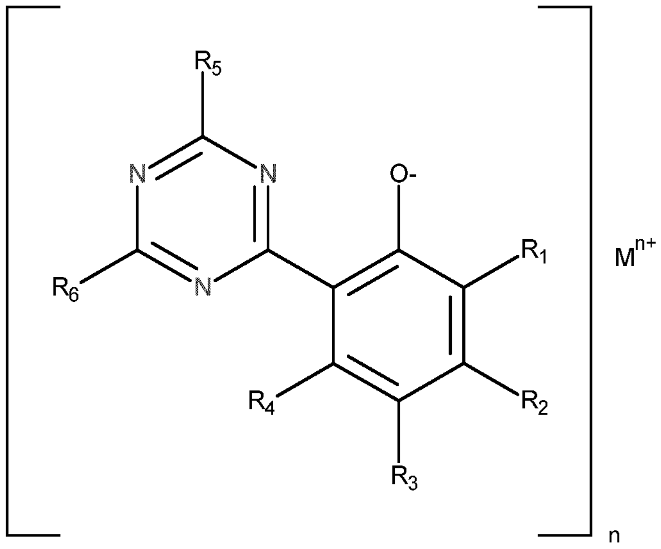

wherein $R^1$, $R^3$, and $R^4$ each independently comprises a hydrogen atom or a substituent group comprising an alkyl or substituted alkyl, or an aryl or a substituted aryl group;
$R^2$ is a substituent group comprising a halogen atom, an alkyl or substituted alkyl group, an alkenyl group, aryl or substituted aryl, or a group comprising an $-O-R^{11}$, a $-N-R^{11}R^{12}$, a - $B(OR^{13})(OR^{14})$, or a $-SiR^{15}3$, wherein $R^{11}$ comprises a hydrogen atom, an alkyl group, an alkenyl group, an aryl group, or a heteroatom-containing group comprising one or more oxygen, nitrogen, sulfur, or phosphorous atoms; $R^{12}$ comprises a hydrogen atom, an alkyl group, an alkenyl group, an aryl group, or a heteroatom-containing group comprising one or more oxygen, nitrogen, sulfur, or phosphorous atoms; or $R^{11}$ and $R^{12}$ together with the atoms connecting them form a heterocyclic ring structure;
each $R^{13}$ and $R^{14}$ is independently a hydrogen atom, an alkyl group, an aryl group, or $R^{13}$ and $R^{14}$ together with the atoms connecting form a heterocyclic ring structure;
each $R^{15}$ is an alkyl group;
each $R^5$ and $R^6$ independently comprises a hydrogen atom, an alkyl group, a substituted alkyl group, an alkenyl group, an aryl group, a substituted aryl group, or a halogen atom;
n is an integer of 1-4; and
M comprises a transition metal or main group metal atom with a valency of n.

**3.** The electret web of claim 2, wherein n = 1 and M comprises lithium, sodium, or potassium.

**4.** The electret web of claim 2, wherein n = 2 and M comprises calcium, magnesium, or cobalt

**5.** The electret web of claim 2, wherein $R^2$ comprises an alkoxy group with 1-20 carbon atoms, and each $R^5$ and $R^6$ independently comprises an aryl group or a substituted aryl group.

**6.** The electret web of claim 2, wherein $R^2$ comprises a substituted alkoxy group with 1-12 carbon atoms comprising an ester-substituted alkoxy group, and each $R^5$ and $R^6$ independently comprises phenyl-substituted phenyl group.

**7.** The electret web of claim 1, wherein the charge-enhancing additive comprises a substituted triazine phenolate anion and a metal cation with the structure:

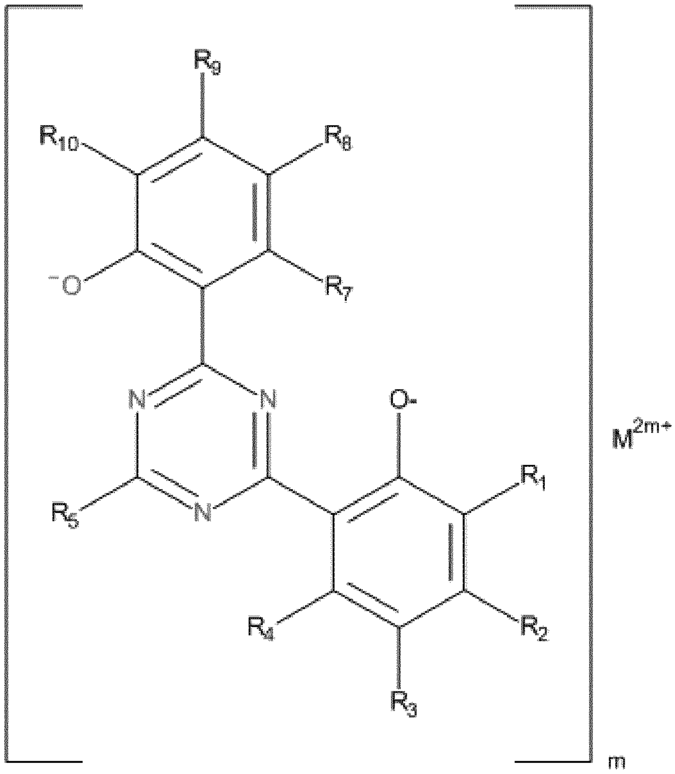

wherein each $R^1$, $R^3$, $R^4$, $R^5$, $R^7$, $R^8$, and $R^{10}$ independently comprises a hydrogen atom, an alkyl group, an alkenyl group, an aryl group, or a halogen atom;

$R^2$ and $R^9$ independently comprises a hydrogen atom or a substituent group such that at least one of $R^2$ and $R^9$ is a substituent group comprising a halogen atom, an alkyl or substituted alkyl group, an alkenyl group, aryl or substituted aryl, or a group comprising an -O-$R^{11}$, a -N-$R^{11}R^{12}$, a -B(O$R^{13}$)(O$R^{14}$), or a -Si$R^{15}$3, wherein $R^{11}$ comprises a hydrogen atom, an alkyl group, an alkenyl group, an aryl group, or a heteroatom-containing group comprising one or more oxygen, nitrogen, sulfur, or phosphorous atoms; $R^{12}$ comprises a hydrogen atom, an alkyl group, an alkenyl group, an aryl group, or a heteroatom-containing group comprising one or more oxygen, nitrogen, sulfur, or phosphorous atoms; or $R^{11}$ and $R^{12}$ together with the atoms connecting form a heterocyclic ring structure;

each $R^{13}$ and $R^{14}$ is independently a hydrogen atom, an alkyl group, an aryl group, or $R^{13}$ and $R^{14}$ together with the atoms connecting form a heterocyclic ring structure;

each $R^{15}$ group is an alkyl group;

m = 0.5, 1, or 2; and

M comprises a transition metal or main group metal atom with a valency of 2m.

**8.** The electret web of claim 7, wherein m = 0.5, and M is lithium, sodium, or potassium.

**9.** The electret web of claim 7, wherein m = 1, and M is calcium, magnesium, or cobalt.

**10.** The electret web of claim 7, wherein m = 2, and M is vanadium or titanium.

**11.** The electret web of claim 7, wherein each of $R^2$ and $R^9$ comprise an alkoxy group with 1-20 carbon atoms.

**12.** The electret web of claim 7, wherein each $R^1$, $R^3$, $R^4$, $R^7$, $R^8$, and $R^{10}$ comprises a hydrogen atom; $R^2$ and $R^9$ each comprises an -O-$R^{11}$ group, wherein $R^{11}$ comprises a an alkyl group with 8 carbon atoms; and $R^5$ comprises a 3-methoxy phenyl group.

**13.** The electret web of claim 1, wherein the charge-enhancing additive comprises 0.01-5.0 % by weight of the web.

**14.** The electret web of claim 1, wherein the web contains an electrostatic charge, wherein the charge is imparted through corona treatment, hydrocharging, or a combination thereof.

**15.** Use of the electret web of claim 1 as an electret filter medium.

**Patentansprüche**

**1.** Eine Elektretbahn, umfassend:

ein thermoplastisches Harz; und
einen ladungsverstärkenden Zusatzstoff, der mindestens ein substituiertes Triazinphenolatsalz umfasst.

**2.** Die Elektretbahn nach Anspruch 1, wobei der ladungsverstärkende Zusatzstoff ein substituiertes Triazinphenolatanion und ein Metallkation mit der Struktur:

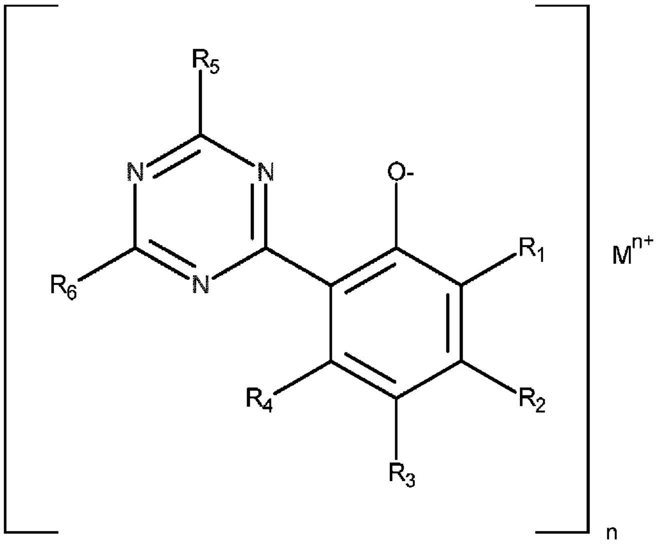

umfasst, wobei $R^1$, $R^3$ und $R^4$ jeweils unabhängig voneinander ein Wasserstoffatom oder eine Substituentengruppe umfassen, die eine Alkyl- oder substituierte Alkyl-, oder eine Aryl- oder eine substituierte Arylgruppe umfasst;
$R^2$ für eine Substituentengruppe steht, die ein Halogenatom, eine Alkyl- oder substituierte Alkylgruppe, eine Alkenylgruppe, Aryl oder substituiertes Aryl oder eine Gruppe umfasst, die einen $-O-R^{11}$, einen $-N-R^{11}R^{12}$, einen $-B(OR^{13})(OR^{14})$ oder einen $-SiR^{15}_3$ umfasst, wobei $R^{11}$ ein Wasserstoffatom, eine Alkylgruppe, eine Alkenylgruppe, eine Arylgruppe oder eine heteroatomhaltige Gruppe umfasst, die ein oder mehrere Sauerstoff-, Stickstoff-, Schwefel- oder Phosphoratome umfasst; $R^{12}$ ein Wasserstoffatom, eine Alkylgruppe, eine Alkenylgruppe, eine Arylgruppe oder eine heteroatomhaltige Gruppe umfasst, die ein oder mehrere Sauerstoff-, Stickstoff-, Schwefel- oder Phosphoratome umfasst; oder $R^{11}$ und $R^{12}$ zusammen mit Atomen, die sie verbinden, eine heterocyclische Ringstruktur bilden;
$R^{13}$ und $R^{14}$ jeweils unabhängig für ein Wasserstoffatom, eine Alkylgruppe, eine Arylgruppe stehen oder $R^{13}$ und $R^{14}$ zusammen mit den Atomen, die sie verbinden, eine heterocyclische Ringstruktur bilden;
$R^{15}$ jeweils für eine Alkylgruppe steht;
$R^5$ und $R^6$ jeweils unabhängig ein Wasserstoffatom, eine Alkylgruppe, eine substituierte Alkylgruppe, eine Alkenylgruppe, eine Arylgruppe, eine substituierte Arylgruppe oder ein Halogenatom umfassen;
n eine ganze Zahl von 1-4 ist; und
M ein Übergangsmetall- oder Hauptgruppenmetallatom mit einer Valenz von n umfasst.

**3.** Die Elektretbahn nach Anspruch 2, wobei n = 1 und M Lithium, Natrium oder Kalium umfasst.

**4.** Die Elektretbahn nach Anspruch 2, wobei n = 2 und M Calcium, Magnesium oder Cobalt umfasst.

**5.** Die Elektretbahn nach Anspruch 2, wobei $R^2$ eine Alkoxygruppe mit 1-20 Kohlenstoffatomen umfasst und $R^5$ und $R^6$ jeweils unabhängig eine Arylgruppe oder eine substituierte Arylgruppe umfassen.

6. Die Elektretbahn nach Anspruch 2, wobei $R^2$ eine substituierte Alkoxygruppe mit 1-12 Kohlenstoffatomen umfasst, die eine estersubstituierte Alkoxygruppe umfasst, und $R^5$ und $R^6$ jeweils unabhängig eine phenylsubstituierte Phenylgruppe umfassen.

7. Die Elektretbahn nach Anspruch 1, wobei der ladungsverstärkende Zusatzstoff ein substituiertes Triazinphenolatanion und ein Metallkation mit der Struktur:

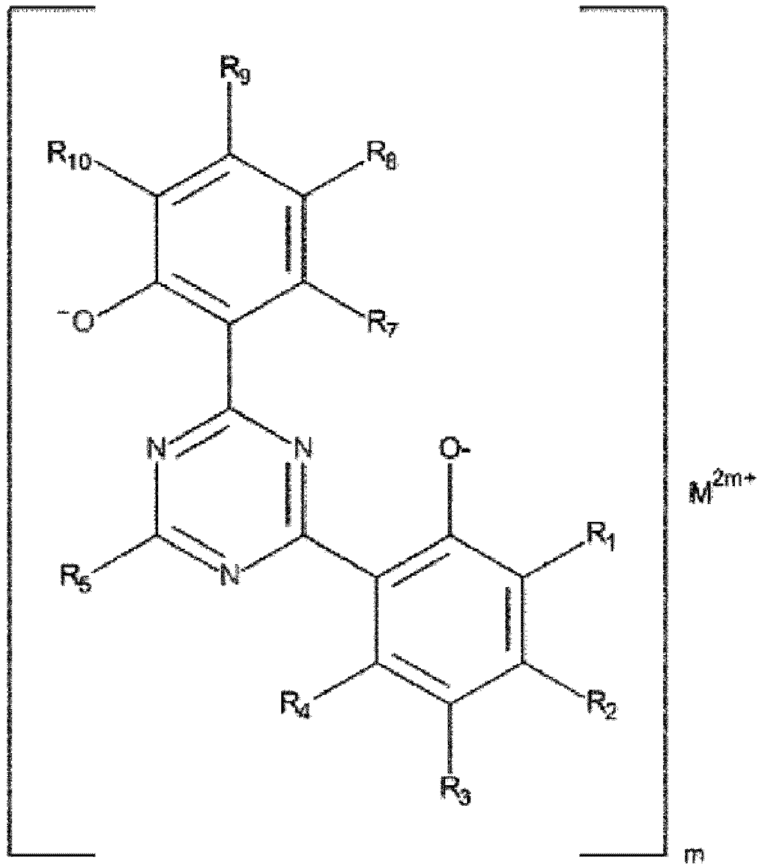

umfasst, wobei $R^1$, $R^3$, $R^4$, $R^5$, $R^7$, $R^8$ und $R^{10}$ unabhängig ein Wasserstoffatom, eine Alkylgruppe, eine Alkenylgruppe, eine Arylgruppe oder ein Halogenatom umfassen;
$R^2$ und $R^9$ unabhängig ein Wasserstoffatom oder eine Substituentengruppe umfassen, sodass mindestens einer von $R^2$ und $R^9$ für eine Substituentengruppe steht, die ein Halogenatom, eine Alkyl- oder substituierte Alkylgruppe, eine Alkenylgruppe, Aryl oder substituiertes Aryl, oder eine Gruppe umfasst, die einen -O-$R^{11}$, einen -N-$R^{11}R^{12}$, einen -B($OR^{13}$)($OR^{14}$) oder einen -$SiR^{15}_3$ umfasst, wobei $R^{11}$ ein Wasserstoffatom, eine Alkylgruppe, eine Alkenylgruppe, eine Arylgruppe oder eine heteroatomhaltige Gruppe umfasst, die ein oder mehrere Sauerstoff-, Stickstoff-, Schwefel- oder Phosphoratome umfasst; $R^{12}$ ein Wasserstoffatom, eine Alkylgruppe, eine Alkenylgruppe, eine Arylgruppe oder eine heteroatomhaltige Gruppe umfasst, die ein oder mehrere Sauerstoff-, Stickstoff-, Schwefel- oder Phosphoratome umfasst; oder $R^{11}$ und $R^{12}$ zusammen mit den Atomen, die sie verbinden, eine heterocyclische Ringstruktur bilden;
$R^{13}$ und $R^{14}$ jeweils unabhängig für ein Wasserstoffatom, eine Alkylgruppe, eine Arylgruppe stehen oder $R^{13}$ und $R^{14}$ zusammen mit den Atomen, die sie verbinden, eine heterocyclische Ringstruktur bilden;
$R^{15}$ jeweils für eine Alkylgruppe steht;
m = 0,5, 1 oder 2; und
M ein Übergangsmetall- oder Hauptgruppenmetallatom mit einer Valenz von 2 m umfasst.

8. Die Elektretbahn nach Anspruch 7, wobei m = 0,5 und M für Lithium, Natrium oder Kalium steht.

9. Die Elektretbahn nach Anspruch 7, wobei m = 1 und M für Calcium, Magnesium oder Cobalt steht.

10. Die Elektretbahn nach Anspruch 7, wobei m = 2 und M für Vanadium oder Titan steht.

**11.** Die Elektretbahn nach Anspruch 7, wobei $R^2$ und $R^9$ jeweils eine Alkoxygruppe mit 1-20 Kohlenstoffatomen umfassen.

**12.** Die Elektretbahn nach Anspruch 7, wobei $R^1$, $R^3$, $R^4$, $R^7$, $R^8$ und $R^{10}$ jeweils ein Wasserstoffatom umfassen; $R^2$ und $R^9$ jeweils eine -O-$R^{11}$-Gruppe umfassen, wobei $R^{11}$ eine Alkylgruppe mit 8 Kohlenstoffatomen umfasst; und $R^5$ eine 3-Methoxyphenylgruppe umfasst.

**13.** Die Elektretbahn nach Anspruch 1, wobei der ladungsverstärkende Zusatzstoff 0,01-5,0 Gew.-% der Bahn ausmacht.

**14.** Die Elektretbahn nach Anspruch 1, wobei die Bahn eine elektrostatische Ladung enthält, wobei die Ladung durch Coronabehandlung, Hydroladung oder eine Kombination davon verliehen wird.

**15.** Verwendung der Elektretbahn nach Anspruch 1 als Elektretfiltermedium.

**Revendications**

**1.** Bande d'électret comprenant :

une résine thermoplastique ; et
un additif de renforcement de charge comprenant au moins un sel phénolate de triazine substitué.

**2.** Bande d'électret selon la revendication 1, dans laquelle l'additif de renforcement de charge comprend un anion phénolate de triazine substitué et un cation métallique avec la structure :

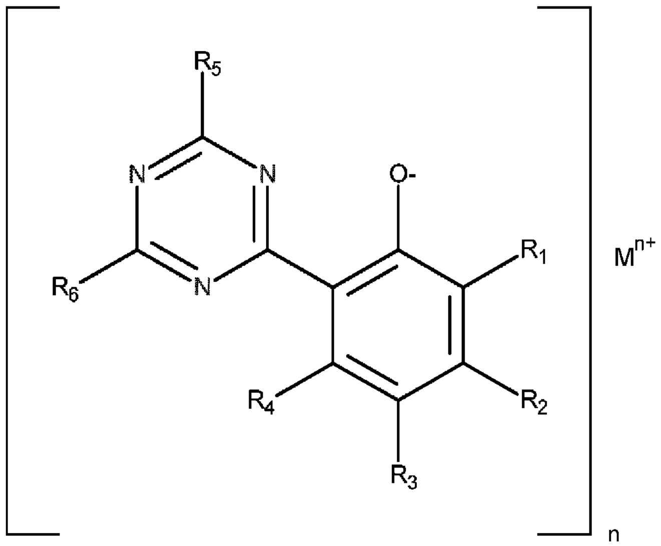

dans laquelle $R^1$, $R^3$ et $R^4$ comprennent chacun indépendamment un atome d'hydrogène ou un groupe substituant comprenant un alkyle ou alkyle substitué, ou un aryle ou un groupe aryle substitué ;
$R^2$ est un groupe substituant comprenant un atome d'halogène, un groupe alkyle ou alkyle substitué, un groupe alcényle, un aryle ou aryle substitué, ou un groupe comprenant un -O-$R^{11}$, un -N-$R^{11}R^{12}$, un -B($OR^{13}$)($OR^{14}$), ou un -$SiR^{15}_3$, dans laquelle $R^{11}$ comprend un atome d'hydrogène, un groupe alkyle, un groupe alcényle, un groupe aryle, ou un groupe contenant un hétéroatome comprenant un ou plusieurs atomes d'oxygène, d'azote, de soufre, ou de phosphore ; $R^{12}$ comprend un atome d'hydrogène, un groupe alkyle, un groupe alcényle, un groupe aryle, ou un groupe contenant un hétéroatome comprenant un ou plusieurs atomes d'oxygène, d'azote, de soufre, ou de phosphore ; ou $R^{11}$ et $R^{12}$ conjointement avec les atomes les reliant forment une structure de noyau hétérocyclique ;
chaque $R^{13}$ et $R^{14}$ est indépendamment un atome d'hydrogène, un groupe alkyle, un groupe aryle, ou $R^{13}$ et $R^{14}$ conjointement avec les atomes les reliant forment une structure de noyau hétérocyclique ;
chaque $R^{15}$ est un groupe alkyle ;
chaque $R^5$ et $R^6$ comprend indépendamment un atome d'hydrogène, un groupe alkyle, un groupe alkyle subs-

tué, un groupe alcényle, un groupe aryle, un groupe aryle substitué, ou un atome d'halogène ;
n est un nombre entier de 1 à 4 ; et
M comprend un atome de métal de transition ou de métal de groupe principal avec une valence de n.

**3.** Bande d'électret selon la revendication 2, dans laquelle n = 1 et M comprend lithium, sodium ou potassium.

**4.** Bande d'électret selon la revendication 2, dans laquelle n = 2 et M comprend calcium, magnésium ou cobalt

**5.** Bande d'électret selon la revendication 2, dans laquelle $R^2$ comprend un groupe alcoxy avec 1 à 20 atomes de carbone, et chaque $R^5$ et $R^6$ comprend indépendamment un groupe aryle ou un groupe aryle substitué.

**6.** Bande d'électret selon la revendication 2, dans laquelle $R^2$ comprend un groupe alcoxy substitué avec 1 à 12 atomes de carbone comprenant un groupe alcoxy à substitution ester, et chaque $R^5$ et $R^6$ comprend indépendamment un groupe phényle à substitution phényle.

**7.** Bande d'électret selon la revendication 1, dans laquelle l'additif de renforcement de charge comprend un anion phénolate de triazine substitué et un cation métallique avec la structure :

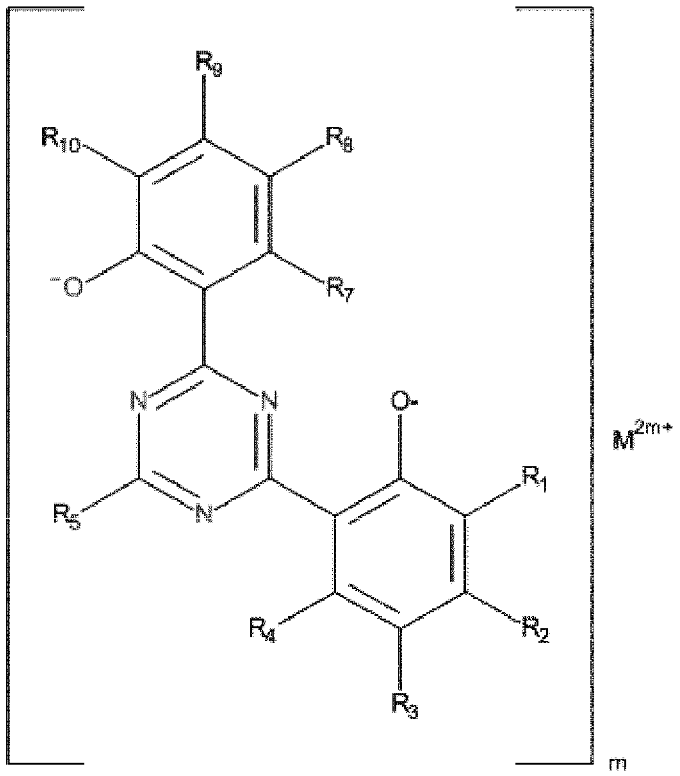

dans laquelle chaque $R^1$, $R^3$, $R^4$, $R^5$, $R^7$, $R^8$ et $R^{10}$ comprend indépendamment un atome d'hydrogène, un groupe alkyle, un groupe alcényle, un groupe aryle, ou un atome d'halogène ;
$R^2$ et $R^9$ comprennent indépendamment un atome d'hydrogène ou un groupe substituant de telle sorte qu'au moins l'un parmi $R^2$ et $R^9$ est un groupe substituant comprenant un atome d'halogène, un groupe alkyle ou alkyle substitué, un groupe alcényle, un aryle ou aryle substitué, ou un groupe comprenant un $-O-R^{11}$, un $-N-R^{11}R^{12}$, un $-B(OR^{13})(OR^{14})$, ou un $-SiR^{15}_3$, dans laquelle $R^{11}$ comprend un atome d'hydrogène, un groupe alkyle, un groupe alcényle, un groupe aryle, ou un groupe contenant un hétéroatome comprenant un ou plusieurs atomes d'oxygène, d'azote, de soufre, ou de phosphore ; $R^{12}$ comprend un atome d'hydrogène, un groupe alkyle, un groupe alcényle, un groupe aryle, ou un groupe contenant un hétéroatome comprenant un ou plusieurs atomes d'oxygène, d'azote, de soufre, ou de phosphore ; ou $R^{11}$ et $R^{12}$ conjointement avec les atomes les reliant forment une structure de noyau hétérocyclique ;
chaque $R^{13}$ et $R^{14}$ est indépendamment un atome d'hydrogène, un groupe alkyle, un groupe aryle, ou $R^{13}$ et $R^{14}$ conjointement avec les atomes les reliant forment une structure de noyau hétérocyclique ;
chaque groupe $R^{15}$ est un groupe alkyle ;

m = 0,5, 1 ou 2 ; et
M comprend un atome de métal de transition ou de métal de groupe principal avec une valence de 2 m.

**8.** Bande d'électret selon la revendication 7, dans laquelle m = 0,5, et M est lithium, sodium ou potassium.

**9.** Bande d'électret selon la revendication 7, dans laquelle m = 1, et M est calcium, magnésium ou cobalt.

**10.** Bande d'électret selon la revendication 7, dans laquelle m = 2, et M est vanadium ou titane.

**11.** Bande d'électret selon la revendication 7, dans laquelle chacun parmi $R^2$ et $R^9$ comprend un groupe alcoxy avec 1 à 20 atomes de carbone.

**12.** Bande d'électret selon la revendication 7, dans laquelle chaque $R^1$, $R^3$, $R^4$, $R^7$, $R^8$ et $R^{10}$ comprend un atome d'hydrogène ; $R^2$ et $R^9$ comprennent chacun un groupe -O-$R^{11}$, dans laquelle $R^{11}$ comprend un groupe alkyle avec 8 atomes de carbone ; et $R^5$ comprend un groupe 3-méthoxy-phényle.

**13.** Bande d'électret selon la revendication 1, dans laquelle l'additif de renforcement de charge constitue 0,01 à 5,0 % en poids de la bande.

**14.** Bande d'électret selon la revendication 1, dans laquelle la bande contient une charge électrostatique, dans laquelle la charge est conférée par l'intermédiaire d'un traitement corona, d'un chargement hydraulique, ou d'une combinaison de ceux-ci.

**15.** Utilisation de la bande d'électret selon la revendication 1 en tant que milieu filtrant à électret.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5914186 A, Yau
- JP 08284063 B
- WO 9314510 A
- JP 06254319 B
- EP 623941 A
- US 5871845 A, Dahringer
- EP 447166 A
- US 4874659 A, Ando
- US 6524488 B, Insley
- US 4340563 A
- US 8162153 B
- US 20080038976 A
- US 4118531 A, Hauser
- US 3971373 A, Braun
- US 4100324 A, Anderson
- US 4429001 A, Kolpin
- US 6268495 B
- US 5976208 A
- US 5968635 A
- US 5919847 A
- US 5908598 A, Rousseau
- US 61058029
- US 61058041
- US 7390351 B, Leir
- US 5057710 A, Nishiura
- US 4652282 A
- US 4789504 A, Ohmori
- US 6397458 B
- US 6398847 B
- US 6409806 B
- US 6432175 B
- US 6562112 B
- US 6660210 B
- US 6808551 B, Jones/Lyons
- US 7244291 B, Spartz
- US 7244292 B, Kirk
- US 6419871 B
- US 6238466 B
- US 6214094 B
- US 6213122 B
- US 4557945 A
- US 4508781 A
- US 4264750 A
- US 20030134515 A1
- US 20020174869 A1
- WO 0107144 A
- US 30782 A, van Turnhout
- US 31285 A, van Turnhout
- US 32171 A, van Turnhout
- US 4215682 A, Davis
- US 4375718 A, Wadsworth
- US 5401446 A, Wadsworth
- US 4588537 A, Klaase
- US 4592815 A, Nakao
- US 6365088 B, Knight
- US 5496507 A, Angadjivand
- US 6824718 B, Eitzman
- US 6743464 B, Insley
- US 6454986 B, Eitzman
- US 6406657 B, Eitzman
- US 6375886 B, Angadjivand
- US 7765698 B, Sebastian
- US 8790449 B


### Non-patent literature cited in the description


- **VAN A. WENTE.** Superfine Thermoplastic Fibers. *Industrial Engineering Chemistry,* vol. 48, 1342-1346
- **VAN A. WENTE.** Manufacture of Super Fine Organic Fibers. *Report No. 4364 of the Naval Research Laboratories,* 25 May 1954
- **DAVIES, C. N.** The Separation of Airborne Dust and Particles. *Institution of Mechanical Engineers, London, Proceedings 1B,* 1952
- **R.C. BROWN.** Air Filtration. Pergamon Press, 1993
- **A. J. WAKER ; R. C. BROWN.** Application of Cavity Theory to the Discharge of Electrostatic Dust Filters by X-Rays. *Applied Radiation and Isotopes,* 1988, vol. 39 (7), 677-684